(19) Europäisches Patentamt / European Patent Office / Office européen des brevets

(11) **EP 4 525 347 A1**

(12) **EUROPEAN PATENT APPLICATION**

(43) Date of publication:
**19.03.2025 Bulletin 2025/12**

(21) Application number: **23196965.0**

(22) Date of filing: **12.09.2023**

(51) International Patent Classification (IPC):
**H04L 9/08** (2006.01)

(52) Cooperative Patent Classification (CPC):
**H04L 9/083; H04K 1/02; H04L 9/0875;**
H04L 2209/04; H04L 2209/16; H04L 2209/34

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Deutsche Telekom AG**
  **53113 Bonn (DE)**
• **Technische Universität München**
  **80333 München (DE)**

(72) Inventors:
• **Dr. GEITZ, Marc**
  **Hagen (DE)**
• **HOLSCHKE, Oliver**
  **Berlin (DE)**
• **RITTER, Michaela**
  **Berlin (DE)**
• **YIN, Ming**
  **Panketal (DE)**
• **BOCHE, Holger**
  **Berlin (DE)**
• **MÖNICH, Ullrich**
  **München (DE)**
• **WIESE, Moritz**
  **München (DE)**
• **TORRES FIGUEROA, Luis Angel**
  **München (DE)**

(74) Representative: **Braun-Dullaeus Pannen Emmerling**
**Patent- & Rechtsanwaltspartnerschaft mbB**
**Platz der Ideen 2**
**40476 Düsseldorf (DE)**

(54) **TECHNIQUES FOR ENHANCING SECURITY IN COMMUNICATIONS SYSTEMS**

(57) The invention discloses techniques to provide a seed S for usage in a communication system to enhance a security level of a data communication between communication nodes, in particular between communication partners Alice and Bob that communicate by using a telecommunication network, the method comprising the following steps:
• generating random numbers representing a seed by a seed-generator;
• distributing the seed to at least one of the communication partners Alice and/or Bob;
• providing a functionally identical seed-multiplying-algorithm implemented on a respective processing unit of the communication partners Alice and Bob;
• using the seed S multiplying as input to the seed-multiplying-algorithm to obtain identical multiple seeds $S_1$, $S_2$, ..., $S_i$, ..., $S_n$ by the communication partners Alice and Bob;
• wherein Alice and Bob agree on using the same seed Si to enhance the security of a data message m that is to be exchanged between Alice and Bob, wherein Alice creates artificial noise $N_{Art}$ to the message m by using the seed Si and wherein Bob removes the artificial noise $N_{Art}$ of the message m by using the seed Si.

Fig. 4

EP 4 525 347 A1

**Description**

The invention relates to technology agnostic techniques for realizing multidimensional security measures in communication systems. In particular, the invention relates to techniques how to efficiently provide a seed S to communication partners to provide a greater level of randomness to secure the communication between the communication partners.

As post-quantum cryptography (PQC) gradually supersedes its classical counterpart, it will play a key role in securing future communications. However, there is still a need of technical solutions in case PQC becomes ever compromised.

In principle, PQC can be compared to a classical encryption method. However, PQC is based on very sophisticated mathematical algorithms so that it is being assumed that even quantum computing will not be able to break the codes and to decrypt messages that have been encrypted by PQC methods. However, there is no real proof that PCQ cannot be decrypted by an attacker. Additionally, PQC requires a large computational overhead that can also result in large latency values regarding the data communication.

A physical mechanism to securely exchange keys between two remote parties is Quantum Key Distribution (QKD). QKD introduces, however, some draw-backs. Namely, it is not necessarily an end-to-end (E2E) solution, it requires the introduction of trusted network nodes due to the distance limitation of the quantum channel, and it requires measures for the initial authentication prior to the QKD process. QKD relies on the security of a symmetric encryption scheme to make use of the distributed encryption keys. QKD requires also a separate hardware installation (dedicated dark fiber and QKD servers at its end points) and must therefore be seen as not scalable and expensive solution.

To understand the following, we briefly explain about noise in electromagnetic signals: In electronics, noise is an unwanted disturbance in an electrical signal. Noise generated by electronic devices varies greatly as it is produced by several different effects. Electronic noise is a common component of noise in signal processing. Noise can also happen to electromagnetic signals while the electromagnetic signals travel over a communication channel, the level of the noise depends on the respective technical characteristics of the communication channel. To make messages readable for receivers, error correction due to noise, like FEC (Forward error correction) - that is known to the person skilled in the art - can be applied.

Forward error correction (FEC) is a process of adding redundant data such as an error-correcting code (ECC) to a message so that it can be recovered by a receiver even when no more than a certain number of errors (up to the capability of the code being used) are introduced, either during the process of transmission or on storage. Since the receiver does not have to ask the sender for retransmission of the data, a backchannel is not required in forward error correction. Typically, error-correcting codes are used in lower-layer communication such as cellular network, high-speed fiber-optic communication and Wi-Fi, as well as for reliable storage in media such as flash memory, hard disk and RAM.

In information theory, the technical and/or mathematical treatment of eavesdropping scenario can be done using the wiretap channel as described in "A. D. Wyner, "The wire-tap channel," The Bell System Technical Journal, vol. 54, no. 8, pp. 1355-1387, Oct. 1975". In this model, two legitimate partners are represented by "Alice" and "Bob", who communicate over a noisy channel T with a noise level NT, while the eavesdropper "Eve" intercepts the transmissions through a different noisier channel E, with a noise level NE that is larger than the noise level NT.

Alice's aim here is to fulfill two main goals. First, to ensure reliability in the communication to Bob by decreasing the likelihood of the channel corrupting the transmitted information, thus keeping the probability of decoding error at Bob low. And second, to enforce secrecy by constraining the information leakage to potential eavesdroppers, aiming to keep the statistical correlation between the transmitted message m and the channel output at Eve z as low as possible.

Current solutions assure reliability and secrecy jointly as described in "M. Bloch, M. Hayashi, and A. Thangaraj, "Error-Control Coding for Physical-Layer Secrecy," Proceedings of the IEEE, vol. 103, no. 10, pp. 1725-1746, Oct. 2015", which only provides a rigid and non-flexible solutions that is hard to implement into existing communication infrastructure.

Although wiretap code constructions have been reported in the literature, most of them do not fulfill the requirements set by a security metric as strong as information theoretic semantic security.

If a communication scheme satisfies information-theoretic semantic security, then the eavesdropper can apply any operation to the observations made on its channel output and still will only obtain negligible information about the transmitted message. These operations are not bound to being implementable on any type of computer, let alone of being computable in finite time. In contrast to this, cryptographic semantic security only considers eavesdroppers who are computationally bounded, i.e., the operations which they can perform are limited to being implementable on a computer and to produce an output in reasonable (polynomial) time.

Initial situation with physical layer security: Physical Layer Security (PLS) is considered to be semantically or information-theoretically secure, provided that the assumption of the best possible signal quality is fulfilled. The attacker must not have a better signal-to-noise ratio (S/R) at his receiving unit than previously modelled. If this assumption is not the case, the attacker can extract information from the signal. The use of PLS thus requires accurate modelling about the transmitters and antenna systems, realistic assumptions about the ability of an attacker to pick up information-bearing signals in an environment to be protected. A modelling error would potentially result in the leakage or extraction of information. On the other hand, if the model assumptions regarding the maximum signal-to-noise ratio to be achieved are too strict, this has a direct influence on the amount of information that can be transmitted.

The invention can be applied and/or used to a security module SMs for providing a security level in data communication, wherein the security module SMs is configured to receive a message m as input data and configured to transform it to a communication signal x comprising the message m, wherein the security module SMs comprises an encryption-based security module SMs, $_{enc}$ and an PLS-based security module SMs, $_{PLS}$, wherein

- the encryption-based security module SMs, $_{enc}$ encrypts the message by using a key, and

  ○ the encryption can be done by using a commonly known encryption algorithm $A^{-1}$ and by sharing the appropriate keys between the sending unit and the receiving unit in advance; the encryption transforms the message to an encrypted message that can be named C, so that the encryption functionality can be described as $C = A^{-1}(m, key)$;
  ○ in particular, PQC encryption functionalities are used;

- the PLS-based security module SMs, $_{PLS}$ comprises an artificial-noise-generating component configured to add artificial noise of a level $N_{Art}$ according to a function $f^{-1}$ to the message so that

  ○ after a transmission of the communication signal x over a communication channel T with a noise level $N_T$ to a receiver that transforms the communication signal x to the communication signal y, the message remains readable to the receiver.

    ■ this adding of the artificial noise can be described as $x = f^{-1}(C)$;
    ■ the communication signal x has been transformed to the signal y because of the noise $N_T$ of the communication channel. Within the context of this invention, we also refer to a communication path, wherein communication path and communication channel are technically identical. A communication channel can be realized as a wireless communication channel (e.g. cellular channel like 3G, 4G, 5G, 6G or W-LAN) or a fixed line channel (e.g. xDSL, etc.). It is also possible that the communication channel is a mix of a wireless communication terminal and fixed line communication channel. The properties of the respective communication channel determines its noise level N. In general, a fixed line communication channel has less noise than a wireless line communication channel and a communication channel with the shorter distance has less noise than a communication channel with longer distance;
    ■ the receiver of y can apply $f(y)$, which is the inverse function of $f^{-1}$, in order to make the message readable again. In the following, f and $f^{-1}$ are referred to security functions or artificial-noise-generating functions; to distinguish that the receiver gained m from $f(y)$ it can also be specified as $\hat{m}$;
    ■ in an embodiment, the artificial-noise-generating component can be realized as a PLS component, in particular as an IT-PLS component - in this case, the functions f and $f^{-1}$ can also be described as PLS functions or IT-PLS functions;
    ■ in general, all the functions described in the invention can be implemented as a computer program on a processor of the various security modules described or on a processor of a sending unit, receiving unit or a server comprising a security module;
    ■ after a transmission of the communication signal x over a communication channel E with a noise level $N_E$ larger than $N_T$ to an eavesdropper that transforms the communication signal x to the communication signal z, the message can get unreadable to the eavesdropper if $N_E$ is sufficiently high - however to guarantee this kind of semantic security has the downside that the actual payload that can be transmitted in a data stream is being lowered because the data stream also comprises data bits that correspond to the artificial noise $N_{Art}$;
    ■ in particular, the artificial noise can only be known to the artificial-noise-generating component and can be generated in a randomized fashion; the artificial noise can insert bits of "useless" information into the message m. Due to the noisier channel $N_E$, this can result in so many bit errors to the communication signal z so that any bit error correction method of a receiving terminal of the eavesdropper would result in so many possible "original" messages that it is in principle not possible that the eavesdropper gains any information about the true message m. When perfect semantic security holds, every one of the possible "original" messages has the same likelihood being the original message m;

      - this can be illustrated by the following example: an error correction scheme shall be able to correct one bit out of a 3 bit message: The message is only the following 1 bit message: "1", but 2 more bits of artificial noise are added by $f^{-1}$ that yields: "001"
      - Bob's channel has the noise rate NT that only causes 1 bit error. A possible message Bob receives is "101". Since the error correction scheme can correct one bit, Bob corrects "101" to "001" and then applies f to get the true message "1";

- Eve's channel has the noise rate NE that can cause 3 bit error. A possible message Eve receives is "110". Since the error correction scheme can only correct one bit, Eve gets many possible "original" messages. For example, if the first bit was successfully corrected, then Eve gets the following possible "original" messages: 1) "000", 2) "001", 3)"010", and 4) "001". However, Eve has no information, which of the 4 results is the right one. Even this illustrative schema, that does not cover the whole complexity of $N_{Art}$, shows how fast it gets impossible for Eve to gain the true original message m;

- the communication signal z is different from y because the communication channels T and E have different noise levels. The value of $N_{Art}$ can be sufficiently high that even if the eavesdropper applies f(z), he cannot obtain a readable version of m but something else that does, in the ideal case, not reveal any information of m. The artificial noise level $N_{Art}$ degenerates in combination with the noise level $N_E$ the communication signal so much that f(z) = m does not work. In such a case, the eavesdroppers are allowed to do everything, i.e. also to apply transformations, without being able to obtain the original message;

- the operations of the encryption-based security module SMs, $_{enc}$ and the PLS-based security module SMs, $_{PLS}$ are commutative in a mathematical sense so that they can be applied in principal in any order; the person skilled in the art knows how to adapt the terms like $C = A^{-1}(m, key)$ if the order of applying the modules is being changed;

This provides the technical effect that this provides a multidimensional, in particular a two dimensional, security system that combines the advantages of different data security approaches in a synergetic way.

If cryptography fails then physical layer security protects the digital communication system against an attacker who has arbitrarily high computing capacity.

On the other hand, if PLS fails then cryptography protects a digital communication against an attacker who is equipped with the best antennas and reception equipment - or in other words in the case that $N_E$ is not sufficiently high so that the message z gets readable for the eavesdropper.

If both methods are combined and applied to a physical channel, the result is a security system that is based on two disjoint factors that is superior in its security properties compared to a purely cryptographic solution or PLS solution. It is a further advantage that due to the lower level of added artificial noise, more payload data can be transmitted in the data stream and that due to the lower level of encryption, computational overhead is being reduced that results in lower latency that can be especially beneficial for real-time systems. What could such an approach mean? If we restrict $N_{Art}$, then we hedge against "standard Eve" whose channel is not too good. 2) If Eve has a better channel than standard, encryption can still be helpful. 3) If Eve's channel is better than standard, there will generally still be some "residual security" left over from PLS, which might not be sufficient on its own.

The encryption using cryptography methods can be described as follows, in particular in the embodiment of the PQC encryption method: The PQC method can also be used on the physical channel. A common cryptographic key is negotiated before or during data transmission between the sending or receiving unit via a PQ TLS protocol or similar and this is then used for a symmetrical encryption procedure. The encrypted messages $C = A^{-1}(m, key)$ are then sent from the sending unit to the receiving unit and decrypted again on the receiving side by m = $A(C, key)$. The function A here can either be the standardised AES encryption with 256bit keys or a symmetric stream cipher such as ChaCha20. To facilitate a symmetrical AES-256 encryption on physical channel, encryptors the termination points, that can be the sending unit or the receiving unit, exchange by using PQC cryptography a common key. Possible PQC algorithms are KEM-algorithms (Kyber, NTRU) and for authentication SIG-algorithms (Falcon, Rainbow) can be used. It is also possible to use a set of public and private keys.

Alternatively, PQC encryption algorithms can be used directly to encrypt the data traffic, but this requires a sacrifice in performance has to be made.

In an embodiment, the encryption-based security module SMs, $_{enc}$ is configured to use symmetric or asymmetric keys. In particular, the keys can be exchanged between the sending unit and the receiving unit via a logically and/or physical independent channel. Key exchange for AES encryption can be secured using PQC KEM (Key Encapsulation Mechanism) and SIG (Signature) algorithms. The exchange rate of the cryptographic keys is preferred to be fast enough to be able to typically 1 terabit of data transfer per second to be able to exchange the AES key.

In an embodiment, the security module SMs comprises a channel coding component, wherein the channel coding component is configured to protect the message m against errors of the communication signal x that occur during transmission over the communication channel T with a noise level $N_T$. This channel coding component can be a known forward error correction (FEC) functionality. Hence, the process can be described as follows: i) encryption operation: $C = A^{-1}(m, key)$ of the sending unit; ii) PLS coding: $v = f^{-1}(C, S)$ of the sending unit; iii) FEC functionality $v \rightarrow x$ of the sending unit; iv) transmission of the signal x over the noisy channel T: $x \rightarrow y$; v) FEC functionality $y \rightarrow v$ of the receiving unit; vi) PLS-decoding: $C = f(v, S)$ of the receiving unit v) decryption operation: $m = A(C, key)$ of the receiving unit;

The forward error correction (FEC) functionality provides the advantage that bit errors that occur during the transmission can be corrected. Without the forward error correction (FEC) functionality, $f(y) = C$ would only work in cases, in cases the noise level $N_T$ is very low, whereas the added artificial noise makes the reconstruction of m for the eavesdropper even harder.

The sending unit and/or the receiving entity can be in principle any technical unit that creates messages and sends communication signals, for example a server, a smart phone, tablet, a computer, an IoT-device, and etc.

The security module SMs can comprise a first interface $I_{SMS,1}$ configured to receive the message m as input data and a second interface $I_{SMS,2}$ configured to send a signal that shows the added artificial noise of the level $N_{Art}$ and is being encrypted.

The purpose of the seed is to average over different realizations of the function $f^{-1}(C,s)$, where s are the possible seed values, since the optimal seed s is unknown in general. Such a function $f^{-1}$ should be used for which it is known that the security averaged over all seeds satisfies the requirements of the application. The seed S is a sequence of random numbers that can become bigger than the sequence $x = f^{-1}(C,S)$ transmitted over the channel, wherein the seed S shall be updated regularly between the communication partners, i.e. Alice and Bob, to maintain security.

The artificial noise $N_{Art}$ can be different because of the randomized "nature" of S. The sending unit can choose seeds that will fulfill the function $m = f_S(y,S)$ freely. The receiving entity uses the security function $f_S(y,S)$ to obtain the message m if the receiving entity knows which particular seed S was used, wherein throughout this text y comprises m. The seed S can be a public seed S and/or can be a reusable seed S. The seed can be generated and made known to the sending unit and the receiving unit. This can be realized through joint random experiments (e.g. using quantum mechanical effects, QKD) or by observing a common random source (e.g. a satellite).

The seed S needed in this embodiment has a bit sequence or any other information means that is generated randomly and exchanged between communication parties before the receiving entity applies $f_s(y,S)$. Having full knowledge of the employed public seed, nonetheless, does not provide the eavesdropper with any advantage to crack the communication if full sematic security is being provided, which depends on $N_E$.

As indicated above, it is a problem that the generation of the seed S and/or the distribution of the seed S between the communication partners consumes many computational resources, which scale with the number of communication partners involved. This problem even increases if multiple seeds shall be generated and/or distributed between the communication partners.

It is therefore the task of the invention to effectively provide seeds S to the communication partners.

This object is solved by the features of the independent claims.

The features of the various aspects of the invention described below or the various examples of implementation may be combined with each other, unless this is explicitly excluded or is technically impossible.

According to a first aspect of the invention, a method is disclosed to provide a seed S for usage in a communication system to enhance a security level of a data communication between communication nodes, in particular between communication partners Alice and Bob that communicate by using a telecommunication network. Alice and/or Bob can be realized in physical entities like servers, UEs, base stations, edge computing elements, etc. The telecommunication network can comprise mobile and/or fixed line communication means, wherein it is of particular advantage to use the invention within the context of mobile communication means like 3G, 4G, 5G and/or 6G communication standards. The method comprises the following steps:

- generating random numbers representing a seed S by a seed-generator; for this purpose, a random number-generator, in particular a QRNG (Quantum Random Number Generator), can be used; the seed S can have the size of several GBits, it can be split into several seeds for application in the function $f^{-1}(C,S)$;
- distribute the seed to at least one of the communication partners Alice and/or Bob; the seed can be distributed directly from the seed-generator to the communication partners or via using other network elements like base stations, edge nodes and/or application servers;
- providing a functionally identical seed-multiplying-algorithm implemented on a respective processing unit of the communication partners Alice and Bob; functionality identical within this context means that it is for example possible that both algorithms are written in different programming language but that they nevertheless yield the same results;
- using the seed S multiplying as input to the seed-multiplying-algorithm to obtain identical sets of multiple seeds $S_1$, $S_2, ..., S_i, ..., S_n$ by each of the communication partners Alice and Bob; the seed multiplication can have a factor of 10, 100 or 1000; hence, the set of seed that is created by Alice $S_{1, Alice}, S_{2, Alice}, ..., S_{i, Alice}, ..., S_{n, Alice}$ is identical to the set of seeds that is created by Bob $S_{1, Bob}, S_{2, Bob}, ..., S_{i, Bob}, ..., S_{n, Bob}$, wherein the seeds that make up the set are different from each other; the number of identical sets can correspond to the number of communication partners;
- wherein Alice and Bob agree on using the same seed Si to enhance the security of a data message m that is to be exchanged between Alice and Bob, wherein Alice adds artificial noise $N_{Art}$ to the message m by using the seed Si and wherein Bob removes the artificial noise $N_{Art}$ of the message m by using the seed Si.

∘ In a more detailed way this can be written as follows that the seed Si is used within the function

$$X = f_S^{-1}(C, S_i)$$

to create a different kind of artificial noise $N_{Art}$, in particular to randomize $N_{Art}$ even more, by Alice. The artificial noise $N_{Art}$ can be different because of the randomized "nature" of S. Bob uses the function $f_S$ $(y, S_i)$ to obtain the message m if the receiving entity knows which particular seed S was used.

This provides the technical effect that seeds Si of the size of a few hundred or thousands GBits can be used by the communication partners Alice and Bob without having to send the data amount of the size of few hundred or thousands GBits over the telecommunication network because the multiplication of the seed S is done within the communication partners. Since on both communication partners the same multiplication algorithm is being implemented, it is ensured that both of the communication partners get the same seeds $S_1, S_2, ..., S_i, ..., S_n$ which is important so that the added artificial noise to the message m can be removed accordingly. The agreement step ensures that both communication partners actually know which was the actual seed Si that was used to enhance the security of the current message m. Hence, the invention provides a method to efficiently save network resources of a communication system, in particular a telecommunication system. The method by which the seeds are calculated can be varied. For example, the method can generate different seeds in time, or in other regions (to implement domain concepts in the network, e.g. country boundaries).

In an embodiment, the seed is distributed to network nodes, edge nodes, to base stations and/or to at least to one of the communication partners Alice and/or Bob in particular, during low traffic times.

Even if only the originally generated seed S shall be distributed over the communication system, this can yield in a huge data traffic over the communication network of the communication system since there are so many possible communication partners like Alice and Bob. Furthermore, one does not know in advance if Alice and Bob actually plan to communicate with each other while the generated seed S is valid (since it is of advantage that the seed only has a limited lifetime). Hence, it is possible that Alice and/or Bob signal to the seed-generator when they plan to communicate with each other and/or that the seed S is distributed first to edge nodes, to base stations (which are less frequent than the actual communication partners) and that the seed S is only transferred in a second step to the actual communication partners on the occasion of an established communication or of a communication request between Alice and Bob. It is of further advantage if this distribution is being performed during low traffic times to unload the communication system.

In an embodiment, low traffic times are assessed by using historical traffic data and/or by using artificial intelligence. Low traffic times can depend on the daytime and/or the location. Historical traffic data and/or artificial intelligence are suitable means to extract or determine such low traffic times appropriately. It is possible that those low traffic times are being determined by a telecommunication provider, in particular a telecommunication provider that sets up the communication system.

In an embodiment, the seed-generator is one of the communication partners or a central seed-generator. If the seed-generator is one of the communication partners this can reduce data traffic because it is not necessary to send the seed S to this very communication partner. However, the generation of the seed S will typically not be implemented on UEs (even if it already being realized on Smartphone) or the like because it can require many computational resources and because the seed S is typically generated for the whole communication system. Hence, it will likely to be more sensible if the seed-generator is being located within a central seed-generator within the communication system that provides many network entities with the appropriate seed S. It may be advantageous not to have to send the seed directly with the communication setup, because it makes the data throughput and protocols more complex - but it would be technically possible to do so. The central solution has the advantage of fail-safety, the creation of a seed service and is certainly the better method for the network from the network.

In an embodiment, the seed-generator comprises a RND validation unit uses statistical tests to validate the quality of the randomness of the seed before it distributes the seed S.

This provides the advantage that only seeds S are being sent over the communication system that show a sufficient quality with respect to randomness.

In an embodiment, the communication partners agree on using the same seed Si based on a selecting algorithm or based on exchanging seed IDs $UUID_i$ before exchanging the message m.

The algorithm can be set up so that the communication starts with the first seed $S_1$, uses this seed $S_1$ x-times and then proceeds with the next seed $S_2$. It is also possible that when performing the multiplying process each of the different seeds Si are assigned to a certain date with the corresponding time window and that the seed Si is the one to be used within this time period. For example, use seed $S_3$ from 2 PM to 2:15 pm. If the communication partners exchange appropriate seed IDs $UUID_i$ assigned to each of the seeds S (in particular during the multiplication process), they can agree on the current seed Si to be used. Only sending the seed IDs $UUID_i$ further provides the advantage that the data amount of the $UUID_i$ is very small-almost negligible - compared to the size of the seeds Si. This provides the advantage that both communication partners use the same Si. It is also possible to quickly produce new seed from already distributed seed by XOR multiplications Si XOR Sj.

In an embodiment, the seed IDs $UUID_i$ are generated and assigned to the seeds by the seed-multiplying-algorithms of the communication partners.

This provides the advantage that an additional agreement which seed corresponds to which seed ID is not necessary since the algorithms are implemented to be functionally identical anyhow.

In an embodiment, the seed is provided to the communication partners by using a communication channel that is logically different from the communication channel that is used to send the message m.

This provides the advantage of further increasing security because eavesdropper needs to overhear both communication channels.

In an embodiment, each seed Si has a limited lifetime, in particular the lifetime can depend on the application running on the respective communication partners. In particular, the generator generates a new seed S after the lifetime is over and/or at well-defined time points, for example every day.

This provides the advantage that the seed S is regularly refreshed which makes it harder for an eavesdropper to read the message m.

In an embodiment, the seed-multiplying-algorithms use an installation specific secret PSK to affect the outcome of the seed multiplication by changing the input seed S to S+PSK.

This provides the advantage that even if the distributed seed S is overheard by an eavesdropper, he cannot guess the multiplied seeds S1, S2, ..., Si, ..., Sn because the input to the algorithms is further amended by adding the specific secret. Due to this feature, it is not necessary to encrypt the distribution of the seed S, if it is being ensured that the secrets are not known to the eavesdropper.

In an embodiment, the installation of the specific secret PSK is shared between the communication partners by using a physical memory unit.

This ensures that the communication partners or users related to the respective communication entities can "carry" the specific secret PSK from Alice to Bob in a way that cannot be overheard by the eavesdropper with telecommunication methods.

In an embodiment, the physical memory unit is configured to allow an extraction of the installation specific secret PSK m-times, wherein m corresponds to the number of the communication partners.

This provides the advantage that Bob and/or Alice are being aware if the third person has already extracted the specific secret PSK. In that case they can choose another specific secret.

According to a second aspect of the invention, a sending unit "Alice" is disclosed that is configured to exchange a message m with a receiving unit "Bob" by means of a communication channel comprising

- a communication interface to receive a seed S, to send a seed S and/or to send a message m;
- a processing unit having a seed-multiplying-algorithm, in particular wherein the seed-multiplying-algorithm is functionally identical to a seed-multiplying-algorithm of the receiving unit, wherein the seed-multiplying-algorithm is configured to use the seed S as input to generate multiple seeds $S_1$, $S_2$, ..., Si, ..., $S_n$;
- selecting means to agree with the receiving unit to a specific seed Si regarding an exchange of a message m;
- a PLS-based security module SMs, $_{PLS}$ comprising an artificial-noise-generating component configured to add artificial noise of a level $N_{Art}$ by using the seed Si according to a function $f^{-1}(S_i)$ to the message m.

The sending unit is configured to execute the steps of the method that are associated to the sending unit. Hence, the sending unit provides the same advantages as described within the context of the steps of the method that are associated to the sending unit.

According to a third aspect of the invention, a receiving unit "Bob" is disclosed that is configured to exchange a message m with a sending unit "Alice" by means of a communication channel comprising

- a communication interface to receive a seed, to send a seed S and/or to receive a message m;
- a processing unit having a seed-multiplying-algorithm, in particular wherein the seed-multiplying-algorithm is functionally identical to a seed-multiplying-algorithm of the sending unit, wherein the seed-multiplying-algorithm is configured to use the seed S as input to generate multiple seeds $S_1$, $S_2$, ..., Si, ..., $S_n$;
- selecting means to agree with the sending unit to a specific seed Si regarding an exchange of a message m;
- an artificial-noise-removing component $SM_{R,PLS}$ configured to remove artificial noise of a level $N_{Art}$ caused by a function $f^{-1}(S_i)$ by using the seed Si and applying a function $f(S_i)$.

The receiving unit is configured to execute the steps of the method that are associated to the sending unit. Hence, the receiving unit provides the same advantages as described within the context of the steps of the method that are associated to the sending unit.

According to a fourth aspect of the invention, a communication system is disclosed, comprising

- a sending unit "Alice", a receiving unit "Bob" or a central seed-generator to generate the seed S;

- the sending unit "Alice" described before and the receiving unit "Bob" described before;
- wherein the communication system is configured to perform the steps of the method according to any of the claims of the method.

Hence, the communication system provides the same advantages as described within the context of the method.

In the following, preferred implementation examples of the present invention are explained with reference to the accompanying figures:

Fig. 1:     shows the mapping of a message mi to a bit string $v_{ib}$;

Fig. 2:     shows a schematically overview of a wiretap scenario;

Fig. 3:     shows a schematically overview of a secure communication between a sending unit and a receiving unit;

Fig. 4:     shows a possible implementation of a communication system with an inventive seed S provision;

Fig. 5:     a negotiation protocol of the usage of a seed Si executed between two or more communication partners;

Fig. 6:     a negotiation protocol of the usage of a seed Si managed by a central controller;

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

The term semantic security exists in the fields of information-theory and cryptography. To make things even clearer, we briefly discuss the differences and similarities of the term semantic security in both fields:

Both information theory and cryptography define "semantic security", but it is important to note that these are distinct concepts. We apply the information-theoretic meaning in our document.

A communication scheme for a wiretap channel satisfies information-theoretic semantic security if the eavesdropper is unable to infer any information about the transmitted message from his knowledge and observations irrespective of the probability distribution of the messages. The independence of the message distribution is what characterizes semantic security and what distinguishes semantic security from weaker types of security, where security is required only on average with respect to an assumed probability distribution of the messages, whether this be the "true" one or otherwise. (The probability distribution of the messages could be described as the "type" of message. For instance, a text from a newspaper encoded in binary letters will likely have a different distribution than binary control messages for a wireless channel.)

Whether or not information-theoretic semantic security is satisfied can be measured mathematically by various methods. There are authors who call a specific such method "semantic security".

If a communication scheme satisfies information-theoretic semantic security, then the eavesdropper can apply any operation to his observations and still will not obtain any information about the transmitted message. These operations are not bound to being implementable on any type of computer, let alone of being computable in finite time. In contrast to this, cryptographic semantic security only considers eavesdroppers who are computationally bounded, i.e., the operations which they can perform are limited to being implementable on a computer and to produce an output in reasonable time.

Before presenting how to efficiently generate and/or distribute the seed S in a communication system the theoretical background shall be discussed briefly. At this point it is stated that it can have a technical effect on the outcome of semantic security depending on which theoretical functions are implemented and how these theoretical functions are implemented.

An overview of existing metrics for measuring information-theoretic security are given next for the sake of completeness and in order to place the metric used by the proposed architecture in context.

Probability of Error:

The most straightforward approach for evaluating the likelihood of the eavesdropper to extract the original message out of its channel output consists in using the same decoders employed at the legitimate receiver and measuring the decoding error probability. Since the eavesdropper is assumed to have knowledge on the architecture details used, it is also assumed to have access to such decoders. However, bit or block error rates (BER, BLER) do not faithfully characterize the statistical independence between the sent message and the channel output at the eavesdropper. Such lack of trustworthiness can deceive the security assurance level of a system, therefore this metric is not suitable for evaluating the information-theoretic security level in the system.

Weak Secrecy measures the normalized mutual information between the sent message M and the channel output at Eve after n observations $Z^n$, as defined by

$$\frac{1}{n}I(M;\,Z^n).\quad(1)$$

However, this metric has been proven unreliable and therefore it is also not a trustworthy way to measure information-theoretic security.

Strong Secrecy is a stronger notion of security, where the total information leakage is quantified by the mutual information between the message M and the n observation of the channel output $Z^n$,

$$I(M;\,Z^n).\quad(2)$$

This metric, nonetheless, assumes that the eavesdropper's a priori knowledge is restricted to the true message distribution, making it weaker than the concept of semantic security that will be discussed next. Therefore, strong secrecy will not be used as a security assurance metric in the proposed architecture.

The concept of semantic security was first introduced in "M. Bellare, S. Tessaro, and A. Vardy, "Semantic Security for the Wire-tap Channel," in Advances in Cryptology - CRYPTO 2012, ser. Lecture Notes in Computer Science, R. Safavi-Naini and R. Canetti, Eds. Berlin, Heidelberg: Springer, 2012, pp. 294-311" and it is the strongest information-theoretic metric known today. In formal terms, semantic security information leakage is defined as the maximization over any arbitrary message distribution $P_M$ of the mutual information between the originally sent message, M, and the corresponding n observations of the channel outputs at the eavesdropper's end, $Z^n$, carrying such message.

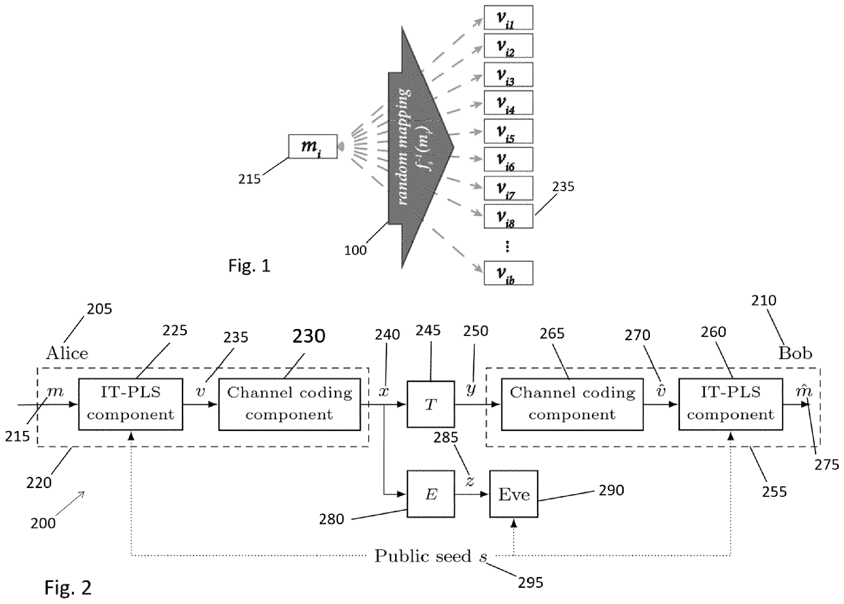

For a wiretap code based on a preferred modular scheme, a public seed $s \in S$ can be used that introduces randomness in the security functions, e.g. IT-PLS encoding function at the IT-PLS component 225 of the proposed architecture when mapping the message m 215 to the bit string v 235, as graphically depicted in Fig. 1.

Fig. 1 shows that the secure message mi 215 is mapped to a bit string $v_{ib}$ according to an encoding security function $f_s^{-1}$ 100. The index i indicates that any of the b bit string belongs to i-th secure message. The number of possible bit strings b varies according to the coding rate used by the channel coding component depending on the channel conditions to Bob.

Thereby, since the distribution of Z" also depends on the seed, S, assuming that the message M was sent, the mutual information is then given by

$$\max_{P_M} I(M;\,Z^n,S).\quad(3)$$

As the code word length n increases, the information leakage to the eavesdropper converges to zero, thus asymptotically achieving perfect secrecy, wherein the code word length *n* is related to the seed S.

Since semantic security provides provable security assurance, it is suitable for future-proofing communication systems. Furthermore, semantic security can be defined based on metrics that have an operational meaning and thereby that can be experimentally measured. Because of these reasons, the architecture can employ security functions in the IT-PLS component 225 that exclusively ensure information-theoretic semantic security.

Wiretap code constructions that use the seeded modular coding scheme and ensure information-theoretic semantic security are based on functions that introduce a level of noise that is optimized with respect to the following goal: the noise added on the message shall not trespass a certain level so that Bob is still capable of reading the message while the noise added to the message shall be enough combined with the noisier path to Eve, so that Eve will not be able to read the message. The technical functionality that adds this noise to the message can be described as being an "artificial-noise-generating function" because in contrast to the noise introduced by the communication path, it is not inherent to the physical properties of the communication path. As this artificial-noise-generating-function enhances the security of the message it can also called "security function".

The statistical difference in the channel outputs y 250 to Bob and z 285 to Eve is exploited to provide message confidentiality by embedding information-theoretic security in the communication system. A security layer, e.g. the security module SMs 220 of Fig. 2, at the transmitter end according to the invention can perform this task by mapping the secure message to a code word according to a randomized encoding function, $f_S^{-1}$ 100, as depicted in Fig. 1. At the receiver end, the decoding function fs performs the demapping to the originally transmitted secure message with the help of the seed "S". However, if the noise level of the channel output z to Eve is high enough, even by using the seed "S", Eve will not be able to decode the message appropriately.

Examples of explicit code constructions of security functions 100, also named artificial-noise-generating functions, $(f_S^{-1}, f_S)$ that can ensure semantic security for arbitrary channels and can be used according to the invention have been found within the following disclosures that are thereby fully incorporated in the invention: M. Hayashi and R. Matsumoto, "Secure Multiplex Coding With Dependent and Non-Uniform Multiple Messages," IEEE Transactions on Information Theory, vol. 62, no. 5, pp. 2355-2409, May 2016; and M. Wiese and H. Boche, "Mosaics of combinatorial designs for information-theoretic security," Designs, Codes and Cryptography, vol. 90, no. 3, pp. 593-632, Mar. 2022.

In a special embodiment, the security function functionality can be described as follows:
Accordingly, semantic security can be achieved with a positive rate by employing a universal hash function (UHF) in the security component of the modular coding scheme for wiretap channels. Under this scheme, the seed s = (*a*, t) consists of two components a and *t,* which represent each a binary sequence of length *l*. Additionally, the first component of the seed, a, must not be a sequence containing exclusively zeros. Given a binary message m of length k that shall be securely transmitted by Alice, the security function $f_S^{-1}$ that performs a mapping $f_S^{-1}: \{0,1\}^k \times \{0,1\}^{l-k} \to \{0,1\}^l$ to the bit string *v* that is defined as

$$v = f_S^{-1}(m, r) = a^{-1} * (\text{m}||\text{r}) \oplus \text{t} , \quad (4)$$

where r $\in \{0,1\}^{l-k}$ is a binary uniform random vector of length *l* - *k*, *k* < *l,* generated by the transmitter and not communicated to any other party. The operations *, $(\cdot)^{-1}$, *and* $\oplus$ represent the multiplication, inverse, and addition in the Galois field *GF(2$^l$),* while || denotes concatenation of binary sequences.

At the receiver end, the IT-PLS decoder receives the output of the coding layer $\hat{v}$ and decodes the binary message $\hat{m}$ by employing the decoding function $f_s: \{0,1\}^l \to \{0,1\}^k$, defined as

$$\hat{m} = f_s(\hat{v}) = [(a * \hat{v}) \oplus t]_k , \qquad (5)$$

where the operation $[\cdot]_k$ denotes the extraction of the first k bits, while the remaining bits are disregarded.

The existence of a second family of code constructions using biregular irreducible functions (BRI) was demonstrated in Semantic Security via Seeded Modular Coding Schemes and Ramanujan Graphs," IEEE Transactions on Information Theory, vol. 67, no. 1, pp. 52-80, 2021 using graph theory. Explicit code constructs are given in M. Wiese and H. Boche, "Mosaics of combinatorial designs for information-theoretic security," Designs, Codes and Cryptography, vol. 90, no. 3, pp. 593-632, Mar. 2022, where four functional forms of mosaics of combinatorial designs with different color rate ranges are proposed based on algebraic operations. These functions operate using the seed as described before, but have the advantage of introducing less overhead by requiring a shorter seed in certain scenarios, when compared with the functions described before.

Fig. 2 shows a schematic overview of a wiretap scenario 200.

A user Alice can use a sending unit 205, like a smart phone 205 or any other communication terminal 205, to send a message to the receiving terminal 210 of a user Bob. The sending unit 205 generates a message m 215, wherein the message m 215 is being transmitted to a security module SMs 220. The security module SMs 220 comprises an artificial-noise-generating component 225, in particular a IT-PLS component 225, and can additionally comprise a channel coding component 230, in particular with a FEC functionality. The artificial-noise-generating component 225 and the channel coding component 230 can be arranged in a modular way independently from each other and work as follows: the message m 215 is an input for an artificial-noise-generating component 220 and is processed by the artificial-noise-generating component 220 to become an output of the artificial-noise-generating component that is labeled as communication signal v 235, wherein the artificial-noise-generating component 220 adds artificial noise of a level $N_{Art}$ to the message m 215 according to the security function $v = f^{-1}(m)$. Then, the communication signal v 235 is an input of the channel coding component 230 and is processed by the channel coding component 230 to become an output that is called communication signal x 240 by adding redundancy information that can be used to correct the signal by the receiving unit 210.

The communication signal x 240 can then be transmitted by sending means of the sending unit 205 over the communication channel T 245 with a noise level $N_T$ that transforms the communication signal x 240 to the communication signal y 250. The communication signal y 250 is being received by the receiving unit 210 of Bob and is an input of a security module $SM_R$ 255 of the receiving unit 210. The security module $SM_R$ 255 comprises an artificial-noise-removing component 260, which can be a IT-PLS component 260, and can comprise a channel coding component 265. The artificial-noise-removing component 260 and the channel coding component 265 can be arranged in a modular way independently from each other and work as follows: The communication signal y 250 is an input of the channel coding component 265 that corrects bit-errors of the communication signal y 250, which has been introduced by traveling over the communication channel T 245 with a noise level $N_T$. This transforms the communication signal y 250 to the communication signal $\hat{v}$ 270. $\hat{v}$ 270 is the input of the artificial-noise-removing component 260 that applies the security function $\hat{m} = f(\hat{v})$, wherein $\hat{m}$ 275 corresponds to the original message m 215. Hence, Bob is able to read the original message m 215.

By sending the communication signal x 240, the communication signal x 240 is in general not only restricted to travel over the communication channel T 245. For example, if the communication signal x 240 is a wireless communication signal it travels into many directions in parallel that corresponds to many different communication channels. In particular, the communication signal x 240 can travel over the communication channel E 280 that has a noise level $N_E$ that is larger than the noise level $N_T$. If the added artificial noise $N_{Art}$ was set appropriately this leads to the effect that traveling over the noiser communication channel E transforms the communication signal x 240 to a communication signal z 285 that shows so much random noise that it is not possible to obtain the original message wherein $\hat{m}$ 275 by Eve with her communication terminal 290 - in other words the communication signal z 285 is semantically secure. This can be expressed mathematically as $\hat{m} \neq f(\hat{z})$.

Even more randomness can be generated to the communication signal x 240 if a public seed S 295 is being applied as follows $f_S^{-1}(m, S)$ and $f_S(y, S)$ and shared between Alice and Bob. Even knowing the public seed S 295 does not help Eve to obtain the original message m because of the semantic security. The public seed can be used for assuring semantic security and countering the uncertainty regarding the knowledge of the channel to the eavesdropper. One advantage of using the public seed is that the architecture remains resilient against eavesdropping attacks despite an incomplete knowledge about the eavesdropper's channel conditions.

The communication signals x 240 or v 235 are being characterized as to have an artificially added noise level $N_{Art}$ that is designed so that $\hat{m} = f(\hat{v})$ can be applied if the communication signals x 240 or v 235 travel over a communication channel T with a noise level $N_T$ and that the artificially added noise level $N_{Art}$, i.e. the amount of added useless information, is high enough so that $\hat{m} \neq f(\hat{z})$ can result if the communication signals x 240 or v 235 travel over the noisier communication channel E with a noise level $N_E$.

As already explained above, the method using only semantic security has two downsides. The adding of $N_{Art}$ to the communication signal has the effect that less payload data is being transmitted by the communication signal. In addition, if the noise level $N_E$ is not sufficiently high, then Eve 290 might be capable to read the message m 215.

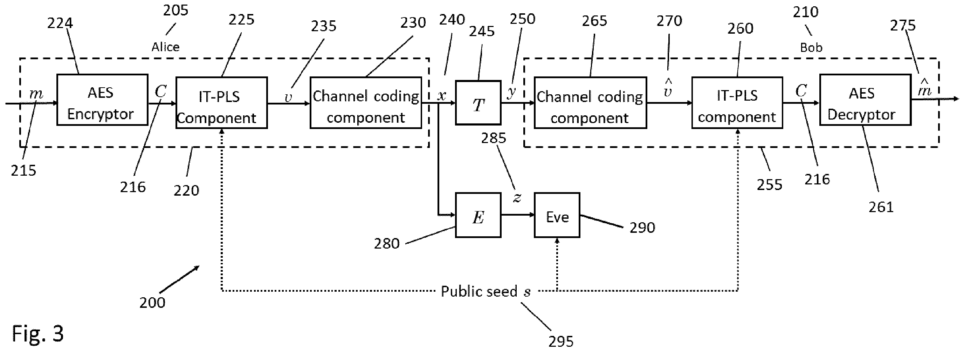

Hence, Fig. 3 shows an adaption of Fig. 2 that introduces multidimensional, in particular two-dimensional, security approaches by also applying data encryption. Just as a clarification, the IT-PLS component 225 of Fig. 2 and Fig. 3 is the PLS-based security module $SM_{S,PLS}$ 225, and the IT-PLS component 260 of Fig. 2 and Fig. 3 is the artificial-noise-removing component $SM_{R,PLS}$ 260, wherein $SM_{R,PLS}$ 260 is configured to remove artificial noise of a level $N_{Art}$. The SMs 220 can comprise an encryption-based security module SMs,enc 224, the PLS-based security module $SM_{S,PLS}$ 225 and/or the coding component 230. The $SM_R$ 255 can comprise an decryption component $SM_{R,dec}$ 224, the artificial-noise-removing component $SM_{R, PLS}$ $SM_{S,PLS}$ 225 and/or the coding component 260.

As can be seen in Fig. 3, the message m 215 is given first to an encryption-based security module $SM_{S,enc}$ 224 that can be on AES encryptor 224 that encrypts the message m 215 using a key and an encryption algorithm $A^{-1}$ to create the message C 216 before the PLS-based security module $SM_{S,PLS}$ 225 is being applied as described in Fig. 2. In the following, the message is being processed and/or the inventive communication signal x 240 is being sent as described in Fig. 2 with the only difference that the receiving unit 210 comprises an decryption component $SM_{R,dec}$ 261 that can be a AES decryptor 261 configured to decrypt the signal by using the key.

This provides the advantage that even if Eve 290 needs to overcome the encryption as well as semantic security to be able to read the message m 215.

Since the operations of the encryption-based security module SMs,enc 224 and the PLS-based security module $SM_{S,PLS}$ 225 are commutative in a mathematical sense, is possible to first apply PLS-based security module $SM_{S,PLS}$ 225 and then the encryption-based security module SMs,enc 224. Of course, the components on the receiving unit 210 need also to be exchanged accordingly.

The usage of the two security approaches that are applied in series after each other can be described as follows, wherein the following embodiment also makes use of the seed approach by using the seed S:

Hence, the process can be described as follows: i) encryption operation: $C = A^{-1}(m, key)$ of the sending unit 205; ii) PLS coding: $v = f^{-1}(C, S)$ of the sending unit 205; iii) FEC functionality $v \rightarrow x$ of the sending unit 205; iv) transmission of the signal x over the noisy channel T: $\rightarrow x \rightarrow y$; v) FEC functionality $y \rightarrow v$ of the receiving unit 210; vi) PLS-decoding: $C = f(v,S)$ of the receiving unit 210 v) decryption operation: $m = A(C, key)$ of the receiving unit 210;

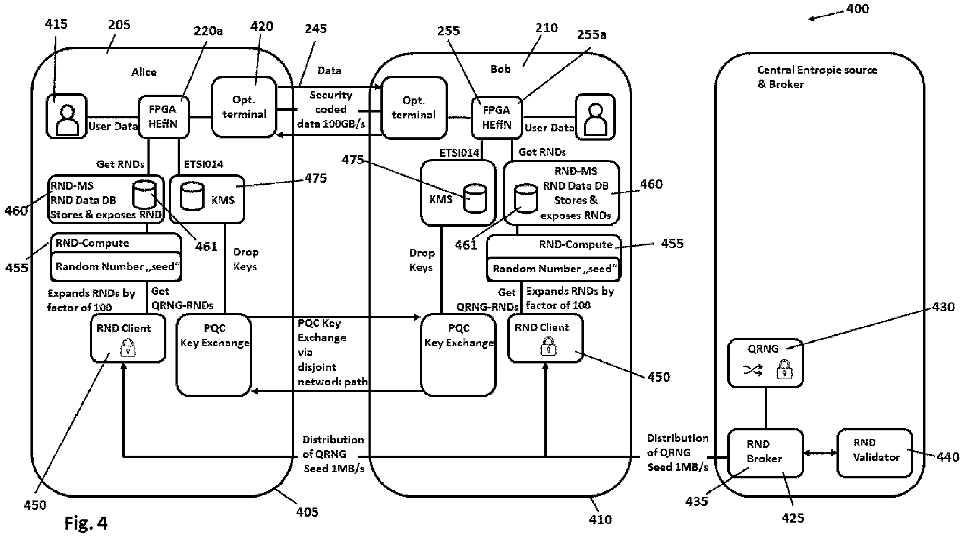

Fig. 4 shows a possible implementation of a communication system 400 with an inventive seed S provision.

Fig. 4 shows that Alice 205 can be realized as a first communication node 405, in particular as a first user equipment 405, and that Bob 210 can be realized as a second communication node 410, in particular as a second user equipment 410. As already shown in Fig. 3 Alice 205 and Bob 210 can communicate with each other by sending data packets over the communication channel 245. For that purpose a service 415, that can be an application, can run on the first communication node 405 and/or the second communication node 410, wherein the message m 215 that is related to the service 415 can enter the FPGA HEffn 220a, wherein the security module SMs 220 comprising the encryption-based security module $SM_{S, enc}$ 224 that encrypts the message 215 by using a key, and the PLS-based security module $SM_{S, PLS}$ 225 as shown in Fig. 3 is being realized technically on the FPGA HEffn 220a. The FPGA HEffn 220a can also comprise the general coding component 230. A first optical terminal 420 or a RF terminal 420 of Alice 205 is used to send the communication signal x 240 comprising the message m 215 to Bob 210.

Bob receives the signal y 250 with its optical terminal 420 or with its RF terminal 420 and forwards it to its FPGA HEffn 255a, wherein the security module $SM_R$ 255 of Fig. 3 that comprises the artificial-noise-removing component $SM_{R,PLS}$ 260, the decryption component $SM_{R,dec}$ 261 and/or the channel de-coding component 265 and is technically realized by the FPGA HEffn 255a.

As explained above, the PLS-based security module $SM_{S, PLS}$ 225 and the artificial-noise-removing component $SM_{R,PLS}$ 260 can make use of the seed S to further enhance security by adding additional randomness to the transmitted message. As already explained, the seed S shall not be used too often between the communication partners and needs to be generated and communicated to those communication partners, in particular in advance before sending a message.

Fig. 4 also shows a seed-generator 425 located within the communication system 400 and being independent from Alice 205 and Bob 210. The seed-generator 425 can be located within the cloud environment, satellite, a server, a mobile UE or a network node. The seed-generator 225 comprises a random number-generator 430, in particular a QRNG 430.

The abbreviation QRNG stands for quantum random number generator. A quantum random number generator is a device that generates random numbers using quantum mechanics. Quantum mechanical systems are random in the sense that they cannot be completely predicted. This makes them ideal for generating random numbers, which are essential for applications such as cryptography and simulation.

The random number-generator 430 generates multiple random numbers. Those random numbers can represent one seed or multiple seeds depending on the length of the seed. For example, if random numbers of length L are generated and the seed length is L/1000, then the created random numbers can make up 1000 different seeds S.

The random number-generator 430 provides the random numbers, i.e. the seeds S, to a RND broker 435 of the seed-generator 425. The random number-generator 430 can be configured to generate random numbers with a rate of about 10 Mbit/s. (with today's technology)

In the context of randomness, the abbreviation RND stands for a random number that is generated with the help of an algorithm.

The RND broker 435 can comprise an algorithm that assigns a unique identifier to each of the different seeds S that results in the tupel (Seed-IDi, Si). The RND broker 435 can show a communication interface to a RND validation unit 440, wherein the RND validation unit 440 uses statistical tests to validate the quality of the randomness of the seed numbers. In particular, if the randomness is sufficiently good, the RND broker 435 can sign the seed numbers so that it can be assessed that those seed numbers were generated in a certified and trusted seed-generator 425. Then the RND broker 435 can distribute the seed numbers within the communication system 400. Due to the large data amount of the seed numbers, they can be distributed by the RND broker 435 within the communication system 400 at low traffic times, for example during the night. Such a process can also be split into several subprocesses to reduce the network load.

Low traffic times can be assessed by analyzing historical records of data traffic of the communication system 400. In principle, it is possible to distribute the seed numbers directly to the communication partners like Alice 205 and Bob 210 but since it is not known which UEs will actually communicate in the near future and having in mind that the lifetime of the seed numbers is limited, it is possible to first distribute them to more "central" network elements like base stations, which are involved in setting up a communication between the communication partners and that these base stations then distribute the seed numbers to those communication partners that actually want to communicate with each other, like Alice 205 and Bob 210. The seed numbers S are received by respective RND clients 450 of Alice and Bob.

It is also possible to reduce the data amount of seed numbers to be sent over the communication system 400 by using a technique to create new seed numbers by multiplying the seed numbers S within the communication partners Alice 205 and Bob 210 or more "central" network elements and then to store them within the communication partners for future use. However, it has to be ensured that both Alice 205 and Bob 210 use the same algorithms for this creation of new seed numbers so that in both communication partners the same "new" seeds are generated and assigned with identical seed-IDs. The seeds S can be public. In the following, in particular the multiplication of the seeds S will be described in particular.

As already described, the seed(s) S are being received by an application of Alice 205 and Bob 210, in particular by the respective RND-clients 450. The RND-client 450 can transmit the random numbers of the seed S to a RND-Computing-unit 455, wherein the RND-Computing-unit 455 can be configured to multiply the random numbers of the seed by a factor of 1000 to 10000, so that the rate of the randomness is about 10 Gbit/s by means of a seed-multiplying-algorithm. Hence, the RND-Computing-unit 455 can be a processing unit 455. The RND-Computing-unit 455 multiplies the random numbers of the seed by using the seed S received by the RND-clients 450 as an input for a random number generator, in particular a linear congruential generator 455 (or similar mathematical process), to generate the multiplied new seed numbers $S_{new}$. If both the RND-Computing-units 455 of Alice 205 and Bob 210 use the same seed S as input and the same seed-multiplying-algorithm (i.e. functionally identical seed-multiplying-algorithm) to multiply the seed, they get identical random numbers seed $S_{new}$, wherein they can also assign each seed Si within $S_{new}$ with identical seed-IDs.

The seed $S_{new}$ can additionally be enriched or processed via a Pre-Shared Secret (PSK) between the communication partners Alice 205 and Bob 210, so that an installation-specific element influences the outcome of the seed $S_{new}$. The modification can then turn the random numbers used for the PLS procedure into secret shared random numbers $S_{new, secret}$. We distinguish:

Enrichment: the seed distributed by the central QRNG 430 is supplemented by a PSK such that: $S_{new, secret} = S + PSK$, i.e. the PSK is added or appended to the seed S generated by the random number-generator 430. $S_{new, secret}$ is then used to multiply the random numbers.

Transformation: the seed distributed by the central QRNG 430 is encrypted using a symmetric encryption method (e.g. AES, ChaCha), with the PSK representing the key. As an alternative to encryption, a hash or any other cryptographic function can be used.

The pre-shared (PSK) secret can be implemented or configured when setting up the respective system that is used by Alice 205 and Bob 210. As explained before, Alice 205 and/or Bob 210 can for example use servers, network nodes and/or UEs to communicate as communication means. It is of advantage to manage, i.e. to regularly change the pre-shared (PSK) secret. The implementation and/or the management can be done by physical memory units on which the pre-shared (PSK) is stored wherein users can connect those physical memory units to the communication means of Alice 205 and Bob 210. In particular, the PSK can be encrypted within the physical memory units by a password. It is of further advantage to configure the physical memory unit accordingly that it is only possible to retrieve the PSK for two times. This makes it almost impossible that a third person can extract the PSK unnoticed by Alice 205 and Bob 210. The physical memory units can be USB-Sticks, dongles, smart cards, etc.

The generated random numbers S, Si or $S_{new}$ are then stored in Gbit blocks in an object database and each seed $S_i \in S$ or $S_i \in S_{new}$ is assigned to a unique identifier, a seed-ID, that can be expressed as UUID (universal unique identifier). This can result in a table of random numbers that looks as follows: First column with n rows: $UUID_1$, $UUID_2$, ..., $UUID_n$; Second column with n rows: $S_1$, $S_2$, ..., $S_n$; or Second column with n rows: $S_{new,1}$, $S_{new,2}$, ..., $S_{new,n}$; Those random numbers can have the size of a few Gbit. This can also be expressed as a list of (UUIDi, Si). It is also possible to further extend the table or the list by information on how often a seed Si can be reused or by specifying specific timing information during which the usage of a seed Si is valid and allowed, for example (UUIDi, Si, 12 pm for 5 minutes ) or ($UUID_i$, Si, max number of usage: five times).

A RND-management entity 460 of Alice 205 and/or Bob 210 obtains the seeds S , Si or $S_{new}$ for example as (UUIDi, Si) and stores them within an object database 461. The object database 461 can be the single point of truth with respect to the calculated random numbers. The individual seeds Si can then be used by the FPGA HEffn 220a as explained above to add additional randomness to the communication signal.

Alice 205 and Bob 210, in particular the respective IT-PLS components 225, 260 can use a negotiation protocol in advance to the communication to ensure that both communication partners have access and use the same seed Si. For that purpose, it has to be ensured, as already explained above, that both communication partners store the same seed Si with the same identifier (UUIDi, Si).

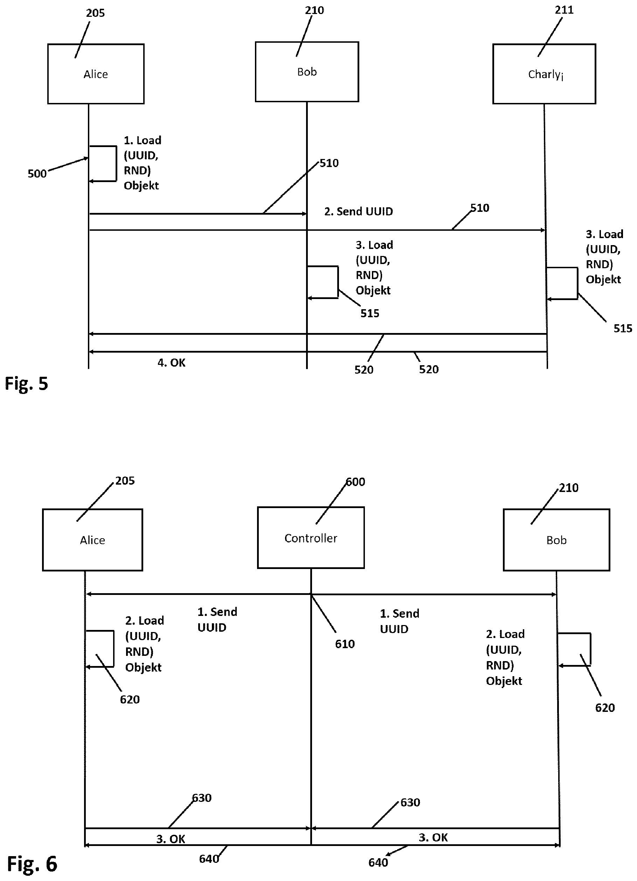

The negotiation protocol can be executed between two communication partners or a group of more than two communication partners as shown in Fig. 5 but it is also possible to coordinate the negotiation protocol in a central way as shown in Fig. 6.

According to Fig. 5:

In step 500 Alice 205 loads one of the available seed elements (UUIDi, Si) from the object database 461 for further usage with respect to its IT-PLS component 225. It extracts the identifier $UUID_i$ of the seed Si that shall be used and sends this $UUID_i$ in step 510 to its communication partners, in this exemplary case to Bob 210 and Charlie 211.

In step 515, Bob 210 and Charlie 211 use the $UUID_i$ they have obtained before and extract the corresponding seed Si from their respective object database and load the seed Si to their respective IT-PLS component 260.

In step 520, Bob 210 and Charlie 211 send acknowledgment information to Alice 205 the order to let Alice 205 know they were able to load the respective seed Si. Instead of the acknowledgment signal is also possible to inform Alice 205 that no successful loading of Si was possible. In that case the procedure starts again at step 500 but with another $UUID_{i+1}$.

According to Fig. 6:

In step 610, a controller entity 600 that can be located centrally within the communication system and that at least has a list of the current valid UUIDs and/or of the whole list (UUIDi, Si) - for the negotiation it is in principle only necessary that the controller entity 600 stores the currently valid UUIDs within a memory unit - transmits a selected $UUID_i$ to the communication partners Alice 205 and Bob 210.

In step 620 both Alice 205 and Bob 210 note the respective seed Si from their object database 461.

In step 630, if the respective seed Si was successfully loaded by the communication partners 205, 210, they send an acknowledgment signal to the controller entity 600.

In step 640, the controller entity 600 can signal to the communication partners 205, 210 that loading of the respective seed Si was successful so that the communication partners 205, 210 can start to communicate with each other.

The random numbers of the seed S are delivered to the encoder from a persistent data storage (SSD-Raid, 400 Mbit/s) via high-performance data buses (PCIe, 1 GBit/sec). The provision of 1 GBit random numbers can therefore be managed within three seconds, with a downward trend. The negotiation and loading process of the random numbers can be buffered, i.e. first negotiate and load a new RND block, only then should a change of the RND block take place.

Within a communication node, the transmission and storage of the random numbers can be encrypted. The calculations can use environments with encrypted main memory. To further reduce attack vectors, the systems can be operated in secured/locked environments and the appropriate IT security measures should be followed.

Fig. 4 also illustrates a key management of a PQC key exchange method.

Two key-applications 470 at Alice 205 and Bob 210 use a PQC-KEM (Key Encapsulation Mechanism) to exchange a random number secretly. The necessary private and public keys can be installed when the communication system 400 is set up and, if necessary, can be renewed at regular intervals. The exchanged keys are stored in a secure memory 475 via a key management system. This secure key store serves as a "single point of truth" in a communication node, in particular in Alice 205 and Bob 210.

It is particularly advantageous if the network paths for transmitting the keys and the seeds are disjunctive to each other. The use of disjunctive network paths has the advantage that an attacker must listen to several physical channels in order to successfully attack the security system.

Alternative key exchange methods are based on quantum key exchange (QKD) or the distribution of random numbers followed by encryption via a pre-shared secret.

The two parts of the architecture, i.e. the PQC key management and the random number distribution and provisioning procedure, can also be used, installed and operated separately from each other.

PQC-SIG algorithms or a PQC trust chain consisting of PQC-CA (Certificate Authority) and server or client certificates can be used to authenticate the communication partners.

If the multiplication of the random numbers is secret (using a PSK), hash values of parts of the calculated random numbers can alternatively be exchanged between the communication partners before a connection is established.

Furthermore, parts of the calculated random numbers, or their hash values, which are known to all end points of the system, can be transmitted in coded form using the PLS procedure. The comparison of the hash values then authenticates the communication partners.

Some advantages can be summarized as follows:

i) combined Layer 1 security of two classically implementable experienced to create quantum secure security performance, where the security is based on disjoint mathematical and physical principles.

ii) two-factor based security, i.e. PQC and PLS- against attackers with infinite computational power and against attackers with good measurement apparatuses.

iii) modular design of PLS, i.e. easily implemented on FPGA hardware. Therefore, the proposed solution is also easy to integrate into existing architectures.

iv) minimal latency delays of a few percent;

v) network agnostic: applicable to all fiber-based, microwave, satellite or cellular networks.

vi) cost-efficient: the solution is cost-efficient because it can be implemented on existing and standardized hardware. The necessary performance is already achievable.

vii) due to the modular design, the solution is scalable and can be used in parallel.

viii) due to the modular design, the solution can also be integrated into existing endpoints for optical, satellite or mobile networks. Thus, the invention would be immediately usable by manufacturers of the corresponding systems.

The advantage of the network architecture shown in Fig. 4 lies in its architectural proximity to QKD architectures (quantum key exchange) that have already been extensively studied. This means that PLS can be embedded in already known architectures on the network side.

The use of central random number generators in cloud infrastructures is easy to implement for telecommunications providers, most of whom also offer ICT services. The distribution of random number seeds within the core networks at night times is not a particular challenge. The (computationally intensive) multiplication of random numbers also takes place at times of low utilization. Encrypted storage of data in object databases additionally increases security. Therefore, it can be concluded that the integration of DCS into provider networks can be efficiently realized according to the presented architecture.

The provisioning of random numbers for the PLS application itself does not require any special protection mechanisms, as the randomness is allowed to be publicly known. This is a major advantage of PLS technology compared to cryptographic key exchange methods.

## Claims

1. Method to provide a seed S for usage in a communication system to enhance a security level of a data communication between communication nodes, in particular between communication partners (205, 210) Alice (205) and Bob (210) that communicate by using a telecommunication network, the method comprising the following steps:

   • generating random numbers representing a seed (295) by a seed-generator (205, 210, 425);
   • distributing the seed (295) to at least one of the communication partners Alice (205) and/or Bob (210);
   • providing a functionally identical seed-multiplying-algorithm implemented on a respective processing unit of the communication partners Alice (205) and Bob (210);
   • using the seed S as input to the seed-multiplying-algorithm to obtain identical sets of multiple seeds $S_1$, $S_2$, ..., $S_i$, ..., $S_n$ by each of the communication partners Alice (205) and Bob (210);
   • wherein Alice (205) and Bob (210) agree on using the same seed Si to enhance the security of a data message m (215) that is to be exchanged between Alice (205) and Bob (210), wherein Alice (205) creates artificial noise $N_{Art}$ to the message m (215) by using the seed Si and wherein Bob (210) removes the artificial noise $N_{Art}$ of the message m (215) by using the seed Si.

2. The method of any of the claims, wherein the seed (295) is distributed to edge nodes, to base stations and/or to at least one of the communication partners Alice (205) and/or Bob (210), in particular during low traffic times.

3. The method of claim 2, wherein low traffic times are assessed by using historical traffic data and/or by using artificial intelligence.

4. The method of any of the claims, wherein the seed-generator (205, 210, 425) is one of the communication partners or a central seed-generator (425).

5. The method of any of the claims, wherein the seed-generator (205, 210, 425) comprises a RND validation unit (440), uses statistical tests to validate the quality of the randomness of the seed.

6. The method of any of the claims, wherein the communication partner agree on using the same seed Si based on an selecting algorithm or based on exchanging seed IDs $UUID_i$ before exchanging the message m (215).

7. The method of claim 6, wherein the seed IDs $UUID_i$ are generated and assigned to the seeds by the seed-multiplying-algorithms of the communication partners (205, 210).

8. The method of any of the claims, wherein the seed is provided to the communication partners (205, 210) by using a communication channel that is logically different from the communication channel (245) that is used to send the message m (215).

9. The method of any of the claims, wherein each seed Si has a limited lifetime, in particular the lifetime can depend on the application running on the respective communication partners (205, 210).

10. The method of any of the claims, wherein the seed-multiplying-algorithms use an installation specific secret PSK to affect the outcome of the seed multiplication by changing the input seed S to S+PSK.

11. The method of claim 10, wherein the installation of the specific secret PSK is shared between the communication partners by using a physical memory unit.

12. The method of claim 10, wherein the physical memory unit is configured to allow an extraction of the installation specific secret PSK m-times, wherein m corresponds to the number of the communication partners.

13. A sending unit "Alice" (205) configured to exchange a message m with a receiving unit "Bob" (210) by means of a communication channel (245) comprising

> • a communication interface to receive a seed S, to send a seed S and/or to send a message m;
> • a processing unit (455) having a seed-multiplying-algorithm, in particular wherein the seed-multiplying-algorithm is functionally identical to a seed-multiplying-algorithm of the receiving unit (210), wherein the seed-multiplying-algorithm is configured to use the seed S as input to generate multiple seeds $S_1$, $S_2$, ..., $S_i$, ..., $S_n$;
> • selecting means to agree with the receiving unit (210) to a specific seed Si regarding an exchange of a message m (215);
> • a PLS-based security module SMs, $_{PLS}$ (225) comprising an artificial-noise-generating component configured to add artificial noise of a level $N_{Art}$ by using the seed Si according to a function $f^{-1}(S_i)$ to the message m (215).

14. A receiving unit "Bob" (210) configured to exchange a message m with a sending unit "Alice" (205) by means of a communication channel (245) comprising

> • a communication interface to receive a seed S, to send a seed S and/or to receive a message m (215);
> • a processing unit (455) having a seed-multiplying-algorithm, in particular wherein the seed-multiplying-algorithm is functionally identical to a seed-multiplying-algorithm of the sending unit (205), wherein the seed-multiplying-algorithm is configured to use the seed S as input to generate multiple seeds $S_1$, $S_2$, ..., $S_i$, ..., $S_n$;
> • selecting means to agree with the sending unit (205) to a specific seed Si regarding an exchange of a message m (215);
> • an artificial-noise-removing component $SM_{R,PLS}$ (260) configured to remove artificial noise of a level $N_{Art}$ caused by a function $f^{-1}(S_i)$ by using the seed Si and applying a function $f(S_i)$.

15. A communication system comprising

> • a sending unit "Alice" (205), a receiving unit "Bob" (210) or a central seed-generator (425) to generate the seed S;
> • the sending unit "Alice" (205) according to claim 13 and the receiving unit "Bob" (210);
> • wherein the communication system (400) is configured to perform the steps of the method according to any of the claims 1-12.

Fig. 2

Fig. 1

Fig. 3

Fig. 4

205    210    211

Alice    Bob    Charly_i

500 — 1. Load
(UUID,
RND)
Objekt

510

2. Send UUID

510

3. Load
(UUID,
RND)
Objekt

515

3. Load
(UUID,
RND)
Objekt

515

4. OK

520    520

**Fig. 5**

205    600    210

Alice    Controller    Bob

2. Load
(UUID,
RND)
Objekt

1. Send
UUID

1. Send
UUID

2. Load
(UUID,
RND)
Objekt

610

620

620

630

630

3. OK    3. OK

**Fig. 6**

640    640

Europäisches
Patentamt

European
Patent Office

Office européen
des brevets

# EUROPEAN SEARCH REPORT

**Application Number**

**EP 23 19 6965**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PEREZ-RESA ADRIAN ET AL: "A New Method for Format Preserving Encryption in High-Data Rate Communications", IEEE ACCESS, IEEE, USA, vol. 8, 21 January 2020 (2020-01-21), pages 21003-21016, XP011770358, DOI: 10.1109/ACCESS.2020.2968816 [retrieved on 2020-02-03] * abstract * * figures 2,4,6,7 * * Algorithm 2 * * sections I,II,IV,V * | 1-15 | INV. H04L9/08 |
| X | FRANK ANNA ET AL: "Implementation of a Modular Coding Scheme for Secure Communication", ICC 2022 - IEEE INTERNATIONAL CONFERENCE ON COMMUNICATIONS, IEEE, 16 May 2022 (2022-05-16), pages 2900-2905, XP034167576, DOI: 10.1109/ICC45855.2022.9839046 [retrieved on 2022-08-11] * sections I, II, IV, V * | 1-15 | |
| X | TORRES-FIGUEROA LUIS ET AL: "Implementation of Physical Layer Security into 5G NR Systems and E2E Latency Assessment", GLOBECOM 2022 - 2022 IEEE GLOBAL COMMUNICATIONS CONFERENCE, IEEE, 4 December 2022 (2022-12-04), pages 4044-4050, XP034269062, DOI: 10.1109/GLOBECOM48099.2022.10001457 [retrieved on 2023-01-11] * abstract; figures 2,3,5 * * sections I-IV,VI * | 1-15 | TECHNICAL FIELDS SEARCHED (IPC) H04L |

-/--

The present search report has been drawn up for all claims

| Place of search | Date of completion of the search | Examiner |
|---|---|---|
| Munich | 22 February 2024 | Yamajako-Anzala, A |

EPO FORM 1503 03.82 (P04C01)

**page 1 of 2**

| | Europäisches Patentamt European Patent Office Office européen des brevets | **EUROPEAN SEARCH REPORT** | **Application Number** EP 23 19 6965 |
| --- | --- | --- | --- |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| A | WO 2020/074068 A1 (NOKIA TECHNOLOGIES OY [FI]) 16 April 2020 (2020-04-16) * page 16 * | 1-15 | |
| A | GUNUKULA SURYA ET AL: "Efficient scheme for secure and privacy-preserving electric vehicle dynamic charging system", 2017 IEEE INTERNATIONAL CONFERENCE ON COMMUNICATIONS (ICC), IEEE, 21 May 2017 (2017-05-21), pages 1-6, XP033133116, DOI: 10.1109/ICC.2017.7997252 [retrieved on 2017-07-28] * section V * | 1-15 | |
| A | ALDAGHRI NASSER ET AL: "Physical Layer Secret Key Generation in Static Environments", IEEE TRANSACTIONS ON INFORMATION FORENSICS AND SECURITY, IEEE, USA, vol. 15, 15 February 2020 (2020-02-15), pages 2692-2705, XP011777097, ISSN: 1556-6013, DOI: 10.1109/TIFS.2020.2974621 [retrieved on 2020-03-10] * sections I-B, II-C * | 1-15 | **TECHNICAL FIELDS SEARCHED (IPC)** |

The present search report has been drawn up for all claims

| Place of search | Date of completion of the search | Examiner |
| --- | --- | --- |
| Munich | 22 February 2024 | Yamajako-Anzala, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 19 6965

This annex lists the patent family members relating to the patent documents cited in  the above-mentioned European search report.
The members are as contained in the European Patent Office EDP file on
The European Patent Office is in no way liable for these particulars which are merely given for the purpose of information.

22-02-2024

| Patent document cited in search report | Publication date | Patent family member(s) | Publication date |
|---|---|---|---|
| WO 2020074068 A1 | 16-04-2020 | NONE | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. D. WYNER**. The wire-tap channel. *The Bell System Technical Journal*, October 1975, vol. 54 (8), 1355-1387
- **M. BLOCH** ; **M. HAYASHI** ; **A. THANGARAJ**. Error-Control Coding for Physical-Layer Secrecy. *Proceedings of the IEEE*, October 2015, vol. 103 (10), 1725-1746
- Semantic Security for the Wire-tap Channel. **M. BELLARE** ; **S. TESSARO** ; **A. VARDY**. Advances in Cryptology - CRYPTO 2012, ser. Lecture Notes in Computer Science. Springer, 2012, 294-311

- **M. HAYASHI** ; **R. MATSUMOTO**. Secure Multiplex Coding With Dependent and Non-Uniform Multiple Messages. *IEEE Transactions on Information Theory*, May 2016, vol. 62 (5), 2355-2409
- **M. WIESE** ; **H. BOCHE**. Mosaics of combinatorial designs for information-theoretic security. *Designs, Codes and Cryptography*, March 2022, vol. 90 (3), 593-632
- Semantic Security via Seeded Modular Coding Schemes and Ramanujan Graphs. *IEEE Transactions on Information Theory*, 2021, vol. 67 (1), 52-80